# EUROPÄISCHE PATENTSCHRIFT

(11) **EP 1 154 918 B1**
(45) Veröffentlichungstag und Bekanntmachung des Hinweises auf die Patenterteilung: **07.06.2006**
(21) Anmeldenummer: 00987179.9
(22) Anmeldetag: 23.11.2000
(51) Int. Cl.: B60S 1/04, B60S 1/34

(54) **WISCHERANTRIEBSVORRICHTUNG**
WIPER DRIVE ARRANGEMENT
DISPOSITIF D'ENTRAINEMENT D'ESSUIE-GLACE

(30) Priorität: 24.12.1999 DE 19962970
(43) Veröffentlichungstag der Anmeldung: 21.11.2001
(73) Patentinhaber: ROBERT BOSCH GMBH, 70442 Stuttgart (DE)
(72) Erfinder: KNAUF, Richard, F-67480 Roppenheim (FR); HULTQUIST, Kevin, Bartlett, IL 60103 (US); PARMELEE, Mike, Naperville, IL 60565-3126 (US)
(86) Internationale Anmeldenummer: PCT/DE2000/004148
(87) Internationale Veröffentlichungsnummer: WO 2001/047755

(56) Entgegenhaltungen:
- EP-A- 0 704 357
- DE-A- 19 804 135
- JP-A- 11 093 949
- US-A- 5 186 546
- US-A- 5 809 610

## Beschreibung

### Stand der Technik

Die Erfindung betrifft eine Wischerantriebsvorrichtung nach dem Oberbegriff des Hauptanspruchs. Wischerantriebsvorrichtungen, insbesondere für Scheibenwischer an Kraftfahrzeugen, sind bekannt. Diese umfassen im allgemeinen eine elektromotorisch angetriebene Wischerwelle, die mit einem Wischer in Wirkverbindung steht. Im Betrieb führt die Wischerwelle eine pendelnde Bewegung aus und sorgt für die typische Wischbewegung bei Scheibenwischern an Kraftfahrzeugen.

Die zum Teil sehr hohen Drehmomente, die bei Wischbewegungen auftreten, erfordern eine hinreichend stabile Lagerung der Wischerwelle in einem Lagergehäuse. Diese Lagergehäuse sind in der Regel ortsfest mit der Karosserie verbunden oder beispielsweise bei Heckscheibenwischern mit abklappbarer Heckscheibe direkt an der Heckscheibe angeordnet.

Herkömmlicherweise werden die Lagergehäuse aus einem metallischen Werkstoff, beispielsweise Aluminium oder Zink gegossen, und die Wischerwelle anschließend mit an den beiden freien Enden des Lagergehäuses angeordneten Lagern zur Aufnahme der Wischerwelle gelagert.

Das Gießen dieser Lagergehäuse weist den großen Nachteil auf, daß eine Nachbearbeitung insbesondere der Lagersitze erforderlich ist, um die hohen Ansprüche bezüglich der Lagergenauigkeit zu erfüllen.

Ein weiterer Nachteil ist, daß die aus Metall gegossenen Lagergehäuse zusammen mit den notwendigen Lagerbuchsen zur Lagerung der Wischerwelle ein relativ hohes Gewicht aufweisen.

Aus der DE-A-198 04 135 ist ein Wischerlager für eine Wischerantriebsvorrichtung nach dem Oberbegriff des Anspruchs 1 bekannt.

Weiterhin ist aus der US-A-5,809,610 ein Wischerlager für eine Wischerantriebsvorrichtung bekannt, bei der die Wischerwelle an einem Endbereich des rohrförmigen Abschnitts mit sphärisch geformten Lagermitteln gelagert ist.

### Vorteile der Erfindung

Die erfindungsgemäße Vorrichtung mit den Merkmalen des Hauptanspruchs hat den Vorteil, daß eine aufwendige Nachbearbeitung des Lagergehäuses, insbesondere der Lagerbuchsenaufnahmen entfallen kann. Durch die geringere Dichte des beim Gießen des Lagergehäuses verwendeten Kunststoffs wird außerdem eine Gewichtseinsparung erreicht, was ebenfalls vorteilhaft ist.

Durch die in den Unteransprüchen angegebenen Maßnahmen sind vorteilhafte Weiterbildungen der Vorrichtung nach dem Hauptanspruch möglich.

So ist es von Vorteil, wenn die Wischerwelle direkt in dem rohrförmigen Lagergehäuse gelagert ist. Dadurch können die zur Lagerung der Wischerwelle sonst üblichen Lagerbuchsen entfallen. Als besonders geeigneter Kunststoff für das Lagergehäusematerial hat sich Polyamid herausgestellt.

Weiterhin vorteilhaft ist, wenn die mit der Wischerwelle in Kontakt stehende Fläche des rohrförmigen Lagergehäuses weitgehend stufen- oder kantenfrei ist. Dann ist sichergestellt, daß das Lagergehäuse mit einer möglichst großen Fläche an der Wischerwelle anliegt und die entstehende Belastung gleichmäßig auf das Lagergehäuse verteilt wird.

Eine weitere, sehr vorteilhafte Möglichkeit die Wischerwelle in dem Lagergehäuse zu lagern besteht darin, an mindestens einem, besser an beiden Enden des rohrförmigen Lagergehäuses sphärisch geformte Lagermittel anzuordnen, die drehfest mit der Wischerwelle verbunden sind. Diese an beiden Seiten des Lagergehäuses angeordneten, sphärischen Lagermittel, die in entsprechende Ausnehmungen des rohrförmigen Lagergehäuses eingepaßt sind, gewährleisten eine besonders gute, weil spielfreie Lagerung der Wischerwelle. Außerdem stellen sie sicher, daß die Wischerwelle zusätzlich in axialer Richtung spielfrei gelagert ist.

Dieses Sichern gegen axiales Verschieben wird unterstützt durch Haltemittel, die die sphärischen Lagermittel in ihren Ausnehmungen halten.

Ein entscheidender Vorteil dieser sphärischen Lageranordnung liegt darin, daß die Kombination der beiden Materialien Kunststoff und Stahl bzw. Kunststoff und gesintertes Material besonders gute Gleiteigenschaften zeigt.

Die sphärischen Lagermittel können auch bei herkömmlichen Lagergehäusen eingesetzt werden, wobei der Vorteil Fluchtungsfehler auszugleichen bei Kunststofflagerghäusen voll zum tragen kommt.

### Zeichnung

In der Zeichnung sind zwei Ausführungsbeispiele einer erfindungsgemäßen Wischerantriebsvorrichtung dargestellt und in der nachfolgenden Beschreibung näher erläutert.

### Es zeigen

Fig. 1a eine Explosionsdarstellung einer bekannten Wischerantriebsvorrichtung,
Fig. 1b ein rohrförmiges Lagergehäuse einer bekannten Wischerantriebsvorrichtung im Schnitt,
Fig. 2 ein erstes Ausführungsbeispiel eines erfindungsgemäßen Lagergehäuses im Schnitt,
Fig. 3 ein zweites Ausführungsbeispiel eines erfindungsgemäßen Lagergehäuses mit sphärisch geformten Lagerbuchsen, und
Fig. 4 eine vergrößerte Darstellung des Bereichs I aus Fig. 3.

### Beschreibung der Ausführungsbeispiele

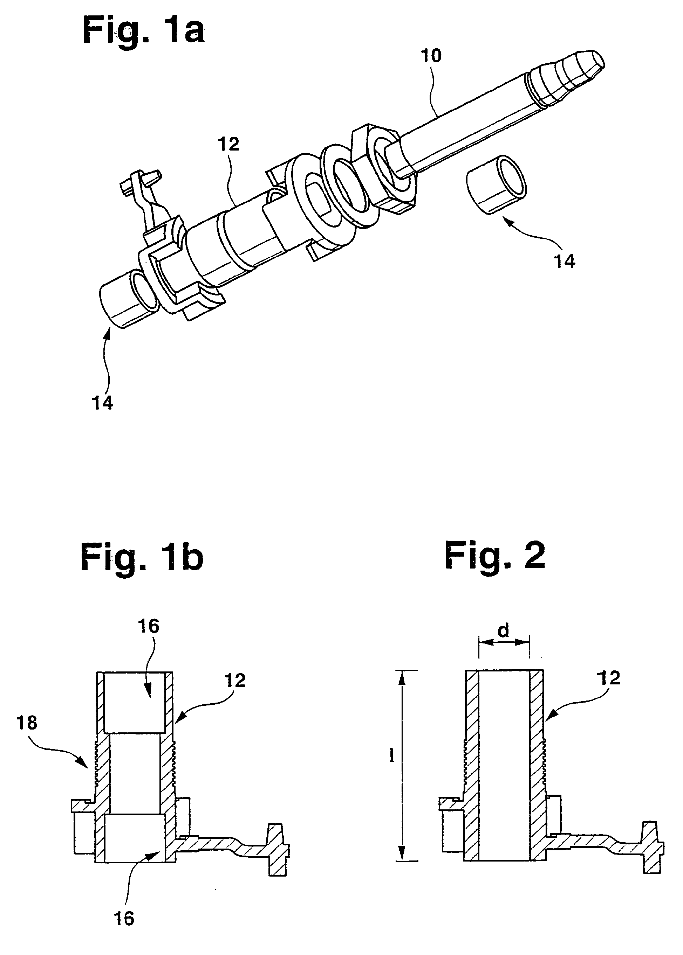

Die Figur 1a zeigt eine Wischerantriebsvorrichtung mit einer Wischerwelle 10, die in einem rohrförmigen Lagergehäuse 12 an den beiden freien Enden des rohrförmigen Lagerghäuses 12 durch Lagermittel 14 drehbar gelagert ist.

In der Zeichnung gemäß Figur 1b sind in dem rohrförmigen Lagergehäuse 12 an den freien Enden Ausnehmungen 16 zur Aufnahme der Lagermittel 14 vorhanden. Zur Fixierung des rohrförmigen Lagergehäuses 12 ist im Mittelbereich ein Gewinde 18 vorgesehen. Das rohrförmige Lagergehäuse 12 nach dem Stand der Technik ist vorzugsweise aus Aluminium oder Zink gegossen. Bei der Herstellung ist nach dem Gießvorgang eine aufwendige Nachbearbeitung der beiden Ausnehmungen 16 sowie des Gewindes 18 erforderlich.

In Figur 2, in der wie in den anderen Figuren gleiche Merkmale mit gleichen Bezugszeichen versehen sind, ist ein erfindungsgemäßes rohrförmiges Lagergehäuse 12 dargestellt, das aus Kunststoff, vorzugsweise aus Polyamid, gefertigt ist. Bei dem aus Kunststoff gegossenen Lagergehäuse 12 können die beiden Ausnehmungen 16 zur Aufnahme der Lagerbuchsen 14 entfallen, weil hier eine direkte Lagerung der Wischerwelle 10 möglich ist.

Somit können auch die Lagerbuchsen 14 entfallen, und das Lagergehäuse 12 kann über seine gesamte Länge 1 einen konstanten Innendurchmesser d aufweisen.

Die mit der Wischerwelle 10 in Kontakt stehende Fläche des rohrförmigen Lagergehäuses 12 ist weitgehend stufen- bzw. kantenfrei.

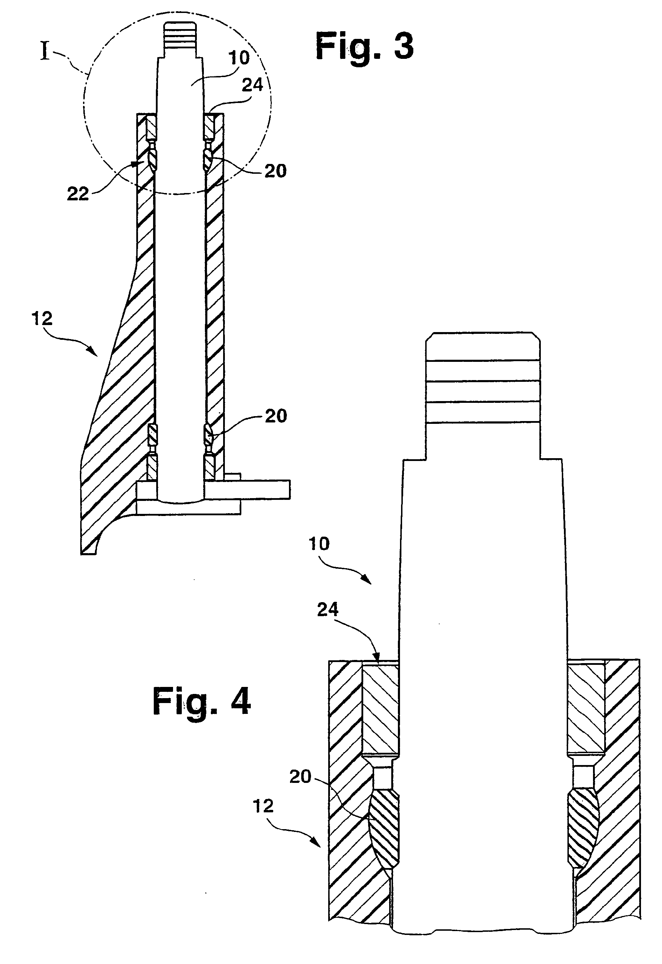

In Figur 3 ist ein zweites Ausführungsbeispiel einer erfindungsgemäßen Wischerantriebsvorrichtung dargestellt, bei dem das rohrförmige Lagergehäuse 12 ebenfalls als Kunststoffteil gegossen ist. Im Unterschied zum ersten Ausführungsbeispiel ist hier die Wischerwelle 10 nicht direkt gelagert, sondern mit Hilfe von sphärischen Lagermitteln 20, die an den beiden Enden des rohrförmigen Lagergehäuses 12 in entsprechenden Aufnehmungen 22 eine spielfreie Lagerung der Wischerwelle 12 bewirken.

Die sphärisch geformten Lagermittel 20 sind drehfest mit der Wischerwelle 10 verbunden. Bei Drehung der Wischerwelle 10 drehen sich die Lagermittel 20 in den Ausnehmungen 22 des rohrförmigen Lagergehäuses 12 und sorgen für eine verschleißarme, wartungsfreie und höchst genaue Lagerung der Wischerwelle 10.

Zur axialen Sicherung der sphärisch geformten Lagermittel 20 sind ebenfalls an beiden freien Enden des rohrförmigen Lagergehäuses 12 Haltemittel 24 angeordnet. Diese Haltemittel 24 drücken die Lagermittel 20 in die Ausnehmungen 22 des rohrförmigen Lagergehäuses 12 und sorgen für einen sicheren Halt der Lagermittel 20.

## Patentansprüche

1. Wischerantriebsvorrichtung, insbesondere für Scheibenwischer an Kraftfahrzeugen, mit einer elektromotorisch angetriebenen Wischerwelle (10), die mit einem Wischer in Wirkverbindung bringbar ist, und einem ortsfest angeordneten, rohrförmigen Lagergehäuse (12), in dem die Wischerwelle (10) drehbar gelagert ist, wobei das rohrförmige Lagergehäuse (12) einteilig aus Kunststoff hergestellt, insbesondere gespritzt ist, **dadurch gekennzeichnet, dass** die Wischerwelle (10) an mindestens einem Endbereich des rohrförmigen Lagergehäuses (12) mit sphärisch geformten Lagermitteln (20) gelagert ist und an den beiden Endbereichen des rohrförmigen Lagergehäuses (12) Ausnehmungen (22) zur spielfreien Aufnahme der sphärisch geformten Lagermittel (20) vorhanden sind.

2. Wischerantriebsvorrichtung nach Anspruch 1, **dadurch gekennzeichnet, dass** die Wischerwelle (10) direkt in dem rohrförmigen Lagergehäuse (12) gelagert ist.

3. Wischerantriebsvorrichtung nach Anspruch 2, **dadurch gekennzeichnet, dass** die mit der Wischerwelle (10) in Kontakt stehende Fläche des rohrförmigen Lagergehäuses (12) weitgehend stufen- oder kantenfrei ist.

4. Wischerantriebsvorrichtung nach Anspruch 1, **dadurch gekennzeichnet, dass** die sphärisch geformten Lagermittel (20) drehfest mit der Wischerwelle (10) verbunden sind.

5. Wischerantriebsvorrichtung nach einem der Ansprüche 1 oder 4, **dadurch gekennzeichnet, dass** die sphärisch geformten Lagermittel (20) drehbar in den Ausnehmungen (22) des rohrförmigen Lagergehäuses (12) angeordnet sind.

6. Wischerantriebsvorrichtung nach einem der Ansprüche 1, 4 oder 5, **dadurch gekennzeichnet, dass** Haltemittel (24) vorhanden sind, die die sphärisch geformten Lagermittel (20) gegen axiales Verschieben sichern.

7. Wischerantriebsvorrichtung nach einem der Ansprüche 1 und 4 bis 6, **dadurch gekennzeichnet, dass** die sphärisch geformten Lagermittel (20) aus Stahl gefertigt sind.

8. Wischerantriebsvorrichtung nach einem der Ansprüche 1 und 4 bis 7, **dadurch gekennzeichnet, dass** die sphärisch geformten Lagermittel (20) aus gesintertem Material gefertigt sind.

## Claims

1. Wiper drive arrangement, in particular for window wipers on motor vehicles, with a wiper shaft (10) which is driven by an electric motor and can be brought into operative connection with a wiper, and a tubular bearing housing (12) which is arranged in a fixed position and in which the wiper shaft (10) is rotatably mounted, the tubular bearing housing (12) being produced as a single part from plastic, in particular being extruded, **characterized in that** the wiper shaft (10) is mounted on at least one end region of the tubular bearing housing (12) by means of spherically shaped bearing means (20) and on the two end regions of the tubular bearing housing (12) there are recesses (22) for accommodating the spherically shaped bearing means (20) in a manner free from play.

2. Wiper drive arrangement according to Claim 1, **characterized in that** the wiper shaft (10) is mounted directly in the tubular bearing housing (12).

3. Wiper drive arrangement according to Claim 2, **characterized in that** that surface of the tubular bearing housing (12) which is in contact with the wiper shaft (10) is largely free from steps or edges.

4. Wiper drive arrangement according to Claim 1, **characterized in that** the spherically shaped bearing means (20) are connected to the wiper shaft (10) in a rotationally fixed manner.

5. Wiper drive arrangement according to either of Claims 1 and 4, **characterized in that** the spherically shaped bearing means (20) are arranged rotatably in the recesses (22) of the tubular bearing housing (12).

6. Wiper drive arrangement according to one of Claims 1, 4 or 5, **characterized in that** there are retaining means (24) which secure the spherically shaped bearing means (20) against axial displacement.

7. Wiper drive arrangement according to one of Claims 1 and 4 to 6, **characterized in that** the spherically shaped bearing means (20) are manufactured from steel.

8. Wiper drive arrangement according to one of Claims 1 and 4 to 7, **characterized in that** the spherically shaped bearing means (20) are manufactured from sintered material.

## Revendications

1. Dispositif d'entraînement d'essuie-glace notamment d'essuie-glace de véhicule automobile comportant un axe d'essuie-glace (10) entraîné par un moteur électrique coopérant avec un essuie-glace et un boîtier de palier (12) tubulaire, fixe, recevant en rotation l'axe d'essuie-glace (10), le boîtier de palier (12), tubulaire étant réalisé en une seule pièce en matière plastique notamment par injection,
**caractérisé en ce que**
l'axe d'essuie-glace (10) comporte au moins une zone d'extrémité du boîtier de palier tubulaire (12), des éléments de palier (20) sphériques et aux deux zones d'extrémité du boîtier de palier tubulaire (12), des cavités (22) reçoivent sans jeu l'élément de palier sphérique (20).

2. Dispositif d'entraînement d'essuie-glace selon la revendication 1,
**caractérisé en ce que**
l'axe d'essuie-glace (10) est installé directement dans le boîtier de palier tubulaire (12).

3. Dispositif d'entraînement d'essuie-glace selon la revendication 2,
**caractérisé en ce que**
la surface du boîtier de palier tubulaire (12) en contact avec l'axe d'essuie-glace (10) est pratiquement sans arête ni épaulement.

4. Dispositif d'entraînement d'essuie-glace selon la revendication 1,
**caractérisé en ce que**
l'élément de palier (20) de forme sphérique est relié solidairement en rotation à l'axe d'essuie-glace (10).

5. Dispositif d'entraînement d'essuie-glace selon l'une des revendications 1 ou 4,
**caractérisé en ce que**
l'élément de palier (20) de forme sphérique est logé à rotation dans la cavité (22) du boîtier de palier tubulaire (12).

6. Dispositif d'entraînement d'essuie-glace selon l'une des revendications 1, 4, ou 5,
**caractérisé par**
des moyens de fixation (24) qui bloquent en coulissement axial les moyens de palier de forme sphérique (20).

7. Dispositif d'entraînement d'essuie-glace selon l'une des revendications 1 et 4 à 6,
**caractérisé par**
des éléments de palier (20) en acier.

8. Dispositif d'entraînement d'essuie-glace selon l'une des revendications 1 et 4 à 7,
**caractérisé par**
des éléments de palier (20) en matière frittée.
